# EUROPEAN PATENT APPLICATION

(11) **EP 2 907 595 A1**
(43) Date of publication of application: **19.08.2015**
(21) Application number: 14159673.4
(22) Date of filing: 13.03.2014
(51) Int. Cl.: B21C 37/29, B21D 22/00, B21J 5/06, F16B 37/02, F16B 37/04, F16L 21/00

(54) **Method for the production of a sleeve provided with a through-hole extending in the radial direction, as well as sleeve and pipe coupling provided with the sleeve**

(30) Priority: 12.03.2013 NL 2010431
(71) Applicant: Huwa International Pipeline Products B.V., 5492 HW Sint-Oedenrode (NL)
(72) Inventor: Barbett, Wolfgang, 46414 Rhede (DE)
(74) Representative: Verhees, Godefridus Josephus Maria

(57) **Abstract**

A pipe coupling 1 comprises a clamping cylinder 3 as well as tightening means by which the clamping cylinder can be clamped around pipes to be joined. The tightening means are formed by two sleeves 7, 9 which can be pulled towards each other by means of two clamp bolts 11.

Each sleeve is provided with two through holes where in a first sleeve 7 the holes 15 are free from thread and in the second sleeve 9 the holes 17 are provided with internal thread.

The sleeve 9 is manufactured by locally flattening a piece of tubing until diametrically opposed wall portions 9a, 9b of the piece of tubing have contact with each other.

Subsequently, a hole 17 is provided in the flattened piece of tubing and this hole is machined with a flow drill mandrel 27, where the wall 17b of the hole flows and is stretched as it were. Finally, internal thread 29 is cut in the wall.

## Description

### Field of the invention

The invention relates to a method of manufacturing a sleeve provided with at least a single through hole which extends in radial direction and has a bounding wall provided with internal thread. Sleeves of this type are used among other things with pipe clamps to join either or not in a liquid-tight manner two pipe segments lying in line.

### State of the art

A method of this type is known from EP 1 568 930 A1. This document discloses a method of providing a threaded hole in a sleeve by first introducing a hole running transversely through the sleeve, subsequently pressing the bounding edges of the holes inwards until they come into contact with each other, and cutting the thread in the hole. A disadvantage of this known method is that when the edges of the holes are pushed inwards the holes tend to become unround. In consequence, it is necessary to bore the holes first before they can be threaded.

### Summary of the invention

It is an object of the invention to provide a simple and cost effective method of forming a sleeve which has a threaded transverse hole. For this purpose the method according to the invention is characterized in that two wall portions of the sleeve situated diametrically opposed to each other are pressed towards each other until they have contact with each other, subsequently a through hole is provided in the two wall portions, after which the hole is machined by means of a flow drill method where the bounding wall of the hole is stretched or flows so that the axial length of the hole increases, and finally internal thread is cut in the hole. After the hole has been bored and the wall of the hole has been stretched by means of the flow drill method, the hole need not first be finished before the thread is cut in the hole. As a result, with this method a simple and cost effective manner can be implemented for manufacturing such a sleeve.

The invention also relates to a sleeve provided with at least a single through hole which extends in radial direction and has an internally threaded bounding wall. As regards the sleeve the invention is characterized in that two sleeve wall portions situated diametrically opposed to each other are pressed together and are provided with the internally threaded through hole whose bounding wall has flown in axial direction.

The invention further relates to a pipe coupling for joining two smooth pipes situated in line and in axial direction present at a short distance from each other, the coupling comprising a clamping cylinder divided over its length as well as tightening means by which the clamping cylinder can be clamped around the two pipes to be joined, which tightening means comprise two cylindrical sleeves each having two through holes bored in radial direction, which sleeves are connected to the edges extending in axial direction along the parting line of the clamping cylinder, where the holes in a first one of the sleeves is free from thread and two clamp bolts project through these holes and with the bolt head abut the sleeve, and the holes in the other, second sleeve are provided with internal thread in which the clamp bolts can be turned. As regards the pipe coupling the invention is characterized in that two diametrically opposed wall portions of the second sleeve are pressed together and are provided with the two internally threaded through holes whose bounding walls are flown in axial direction.

### Brief description of the drawings

The following description relating to the appended drawings, the whole given by way of non-limiting example of the pipe coupling according to the invention, will provide better understanding of how the invention can be realised, in which:
Fig. 1 shows an embodiment of a pipe coupling according to the invention;
Fig. 2 shows the sleeve of the pipe coupling having threaded holes;

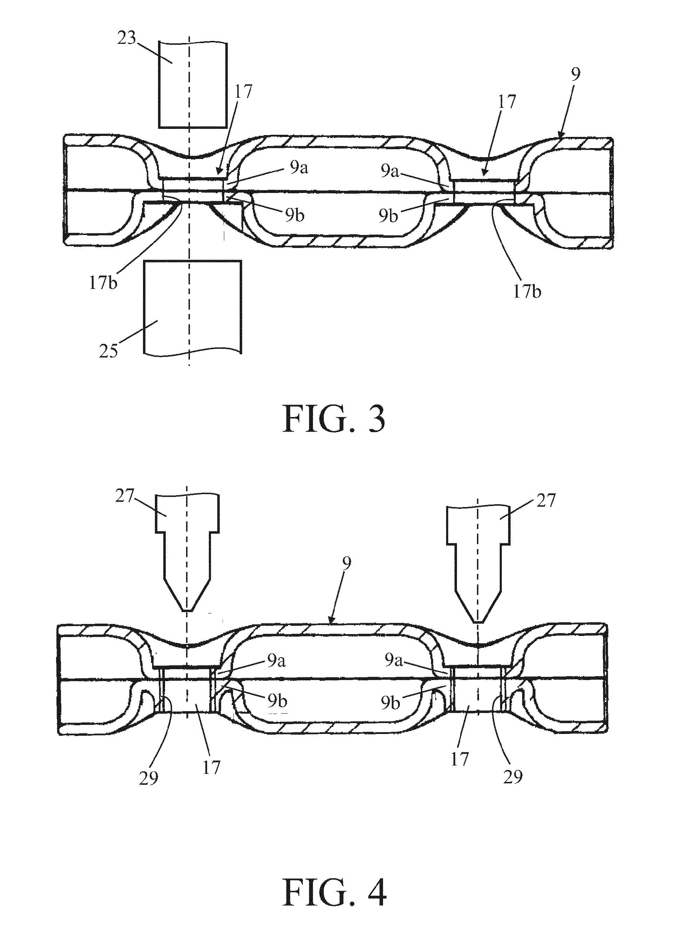

Fig. 3 shows a longitudinal section of the sleeve after wall portions have been pressed together but before the flow drill process has been executed; and
Fig. 4 shows a longitudinal section of the sleeve after the flow drill process has been executed and the thread has been provided.

### Detailed description of the drawings

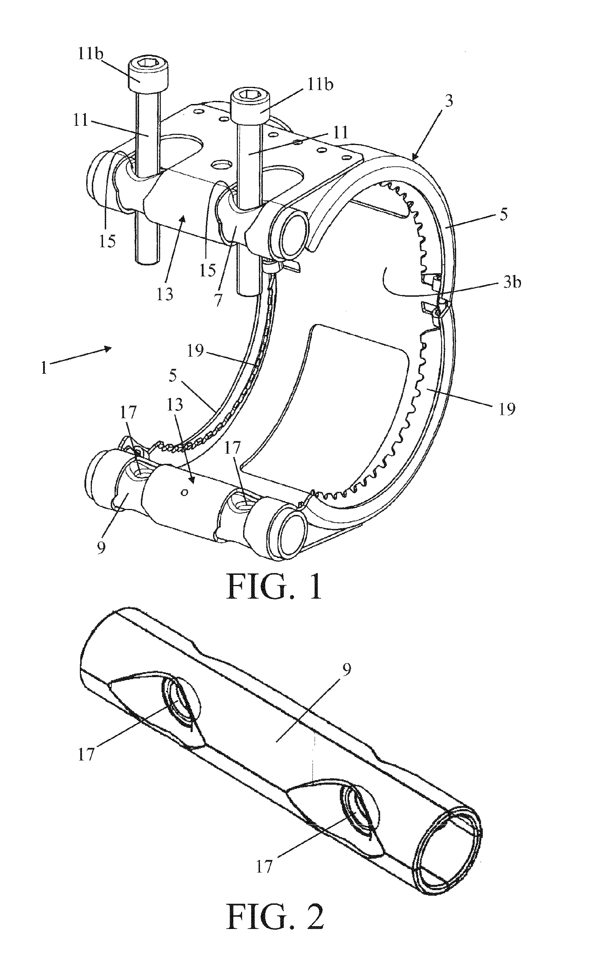

Fig. 1 shows an embodiment of a pipe coupling according to the invention. The pipe coupling 1 comprises a longitudinally divided clamping cylinder 3 whose edges 5 are flanged inwards at the ends, as well as tightening means by which the clamping cylinder can be clamped around pipes to be joined. The tightening means are formed by two sleeves 7 and 9 which can be drawn towards each other by means of two clamp bolts 11.

The sleeves are situated in loops 13 formed by flanged ends of the clamping cylinder 3. Each sleeve 7, 9 has two through holes 15, 17. In a first sleeve 7 the holes 15 are unthreaded and the clamp bolts 11 project through these holes, while the bolt heads 11b abut the sleeve 7. In the other, second sleeve 9 the holes 17 are internally threaded holes in which threaded holes the clamp bolts 11 are turned.

The pipe coupling 1 further includes two conical rings 19 which are interrupted at a certain spot, which rings are each present with an outer edge positioned at an angle between the cylinder sleeve 3b and one of the flanged edges 5. The pipe coupling further includes a sealing muff 21 which is located between the two rings 19 and whose outside is in contact with the inside of the clamping cylinder 3.

The sleeve 9 having threaded holes 17 is produced by locally flattening a piece of tubing, by pressing two round dies 23 and 25 towards each other on either side of the piece of tubing until diametrically opposed wall portions 9a and 9b of the tubing contact each other.

Subsequently, a through hole 17 is provided in the flattened portion and this hole is machined by means of a flow drill mandrel 27 while the wall 17b of the hole 17 flows and is stretched so to say, so that the axial length of the hole increases. Finally, internal thread 29 is cut in the wall. Once the hole 17 has been provided and the wall of the hole has been stretched by means of the flow drill method, the hole does not need any finish machining before the threading of the hole is carried out.

For the flattening are used two dies 23 and 25 which have different diameters and the flow drill mandrel 27 is inserted from the side that is pressed in with the die 23 having the smaller diameter of the two. As a result, the cylindrical bounding wall 17b of the hole 17, which wall is formed by means of the flow drill method, is supported by the edge surrounding the hole 17 on the side that is depressed by the die 23 having the smaller diameter of the two, so that larger tensile forces can be taken care of.

Albeit the invention has been described in the foregoing with reference to the drawings, it should be pointed out that the invention is not by any manner or means restricted to the embodiment shown in the drawings. The invention also extends over any embodiment deviating from the embodiment shown in the drawing Figures within the scope defined by the claims.

## Claims

1. A method of manufacturing a sleeve (9) provided with at least a single through hole (17) which extends in radial direction and has a bounding wall (17b) provided with internal thread (29), **characterized in that** two wall portions (9a, 9b) of the sleeve (9) situated diametrically opposed to each other are pressed towards each other until they have contact with each other, subsequently a through hole (17) is provided in the two wall portions, after which the hole is machined by means of a flow drill method where the bounding wall (17b) of the hole is stretched or flows so that the axial length of the hole increases, and finally internal thread (29) is cut in the hole.

2. A sleeve (9) provided with at least a single through hole (17) which extends in radial direction and has a bounding wall (17b) which is provided with internal thread 29, **characterized in that** two sleeve wall portions (9a, 9b) situated diametrically opposed to each other are pressed together and are provided with the internally threaded 29 through hole (17) whose bounding wall (17b) is flown in axial direction.

3. A pipe coupling (1) for joining two smooth pipes situated in line and in axial direction present at a short distance from each other, the coupling comprising a clamping cylinder (3) divided over its length, as well as tightening means by which the clamping cylinder can be clamped around the two pipes to be joined, which tightening means comprise two cylindrical sleeves (7, 9) each having two through holes (15, 17) bored in radial direction, which sleeves are connected to the edges (5) extending in axial direction along the parting line of the clamping cylinder (3), where the holes in the first one of the sleeves (7) is free from thread and two clamp bolts (11) project through these holes (15) and with the bolt head (11b) abut the sleeve (7), and the holes (17) in the other, second sleeve (9) are provided with internal thread (29) in which the clamp bolts can be turned, **characterized in that** two diametrically opposed wall portions (9a, 9b) of the second sleeve (9) are pressed together and are provided with the two internally threaded (29) through holes (17) whose bounding walls (17b) are flown in axial direction.
